Europäisches Patentamt

European Patent Office

Office européen des brevets

(19)

(11) Veröffentlichungsnummer: **0 205 070**

**B1**

(12) **EUROPÄISCHE PATENTSCHRIFT**

(45) Veröffentlichungstag der Patentschrift: **14.03.90**

(51) Int. Cl.$^5$: **C 01 B 33/32**

(21) Anmeldenummer: **86107488.8**

(22) Anmeldetag: **02.06.86**

(54) **Verfahren zur Herstellung von kristallinen Alkalischichtsilikaten.**

(30) Priorität: **13.06.85 DE 3521227**
**29.06.85 DE 3523364**

(43) Veröffentlichungstag der Anmeldung:
**17.12.86 Patentblatt 86/51**

(45) Bekanntmachung des Hinweises auf die
Patenterteilung:
**14.03.90 Patentblatt 90/11**

(84) Benannte Vertragsstaaten:
**AT BE CH DE FR GB IT LI NL SE**

(56) Entgegenhaltungen:
**DD-A- 220 584**
**DD-A- 220 585**
**DD-A- 221 723**
**DD-A- 221 724**

(73) Patentinhaber: **HOECHST
AKTIENGESELLSCHAFT
Postfach 80 03 20
D-6230 Frankfurt am Main 80 (DE)**

(72) Erfinder: **Rieck, Hans-Peter, Dr.
Staufenstrasse 13a
D-6238 Hofheim am Taunus (DE)**
Erfinder: **Schott, Martin, Dr.
Königsteiner Strasse 7
D-6374 Steinbach/Taunus (DE)**

Courier Press, Leamington Spa, England.

**Beschreibung**

Die Erfindung betrifft ein Verfahren zur Herstellung von kristallinen Alkalisilikaten mit Schichtstruktur in wäßrigem Medium, insbesondere von silikatreichen Alkalischichtsilikaten mit einem Molverhältnis $SiO_2$/Alkalioxid ($M_2O$) von ca. 8:1 bis ca. 23:1.

Neben wasserlöslichen Alkalisilikaten (mit einem niederigen Verhältnis $SiO_2$/Alkalioxid) und schwer löslichen amorphen Alkalisilikaten sind auch kristalline Alkalisilikate bekannt. Bei diesen kann man zwischen Silikaten mit Gerüststruktur (z.B. Zeolithen, die frei von Aluminium oder zumindest arm an Aluminium sind) und Silikaten mit Schichtstruktur unterscheiden.

Kristalline Alkalisilikate mit Schichtstruktur sind teils in der Natur gefunden, teils synthetisch hergestellt worden. Die Synthese der Alkalisilikate mit Schichtstruktur, insbesondere der Natrium- und der Kaliumsalze, erfolgt üblicherweise aus Kieselgel, Kieselsol oder gefällter Kieselsäure unter Zusatz von Alkalihydroxid im wäßrigen System. Gelegentlich wird auch anstelle einer Alkalihydroxidlösung eine entsprechende Carbonatlösung verwendet. Die Menge an zuzugebendem Alkali richtet sich dabei nach dem gewünschten Produkt.

Für den technischen Maßstab ist dabei ein Verfahren wünschenswert, mit dem derartige Alkalischichtsilikate in hoher Ausbeute hergestellt werden können und dennoch nur mit kurzen Reaktionszeiten arbeitet.

In der deutschen Offenlegungsschrift 3 400 132 wird zur Herstellung von silikatreichen Alkalischichtsilikaten vorgeschlagen in wäßrigem Medium ein Alkalisilikat mit einer sauren Verbindung zu behandeln bis ein Molverhältnis Alkalioxide (nicht neutralisiert)/$SiO_2$ von 0,05:1 bis 0,239:1 resultiert und aus dieser Reaktionsmischung das Schichtsilikat auskristallisieren zu lassen.

Aus DD—A 221 724 ist ein Verfahren zum Herstellung von Magadiit bekannt, bei dem festes Natriumwasserglas in einem wäßrigen System bei 350—500 K umgesetzt wird und zugleich als $SiO_2$ und $Na_2O$ liefernder Rohstoff dient. Die Einstellung der für die Magadiit-Synthese notwendigen Alkalität ($OH^-$-Konzentration) kann durch saure Zusätze vor, nach bzw. während des Festglaslöseprozesses zu dem mit einer wäßrigen Phase behandelten Natriumfestwasserglas erreicht werden. Es findet sich kein Hinweis, dem Ansatz nach Beginn der Kristallisation von Magadiit saure Verbindungen zuzusetzen, um ein bestimmtes Verhältnis $Na_2O$ (nicht neutralisiert)/$SiO_2$ einzuhalten.

Aus DD—A—220 585 ist ein Verfahren zur Herstellung von Natriumoktosilikat mit Schichtstruktur bekannt, bei dem eine in Wasser gelöste oder feste in Wasser lösliche Silikatverbindung mit Säure versetzt und dann zur Reaktion gebracht wird. Es gibt keinen Hinweis darauf, daß die Säurezugabe nach Beginn des Auskristallisierens des Zielprodukts fortgesetzt wird.

Es wurde nun ein Verfahren zur Herstellung eines kristallinen Alkalischichtsilikates gefunden, bei dem man eine wäßrige Lösung von Alkalisilikat oder eine Aufschlämmung von amorphem Alkalisilikat mit einem Molverhältnis $M_2O$ (nicht neutralisiert)/$SiO_2$, wobei M für ein Alkalimetall steht, von 0,05:1 bis 0,8:1 bei Temperaturen von 70 bis 250°C hält und diese reaktionsmischung solange reagieren läßt, bis das Alkalischichtsilikat auskristallisiert. Unter "nicht neutralisiertes $M_2O$" soll das Alkali verstanden werden, das nicht durch eine (zugesetzte) Säure gebunden ist, mit Ausnahme von Alkali, das als lösliches Silikat vorliegt. Der Wert für "nicht neutralisiertes $M_2O$" läßt sich ermitteln, wenn die filtrierte Reaktionslösung mit Säure bis pH 7 neutralisiert wird, Das Verfahren ist dadurch gekennzeichnet, daß man nach dem Beginn der Kristallisation eine saure Verbindung in einer solchen Menge zusetzt, daß ständig in der Mutterlauge einer abfiltrierten Probe ein Verhältnis $M_2O$ (nicht neutralisiert)/$SiO_2$ von 0,05:1 bis 0,8:1 eingehalten wird, mindestens jedoch in einer Menge von 5 Milliäquivalent $H^+$/Mol $SiO_2$ des eingesetzten Alkalisilikats. Der pH-Wert der abfiltrierten Probe soll über 9.0 liegen.

Als Ausgangsprodukt dienen Natrium- oder Kaliumwassergläser mit einem $SiO_2$-Gehalt von 22 bis 37%. Insbesondere Natronwasserglas mit einem $SiO_2$-Gehalt von ca. 22 bis 37% und einem $Na_2O$-Gehalt von 5 bis 18% sowie einem $Al_2O_3$-Gehalt von unter 0,5% ist bevorzugt. Dabei handelt es sich um ein in Wasser gelöstes Alkalisilikat. Günstig einsetzbar ist ein Natronwasserglas mit 22 bis 30 Gew.-% $SiO_2$ und 5 bis 9 Gew.-% $Na_2O$. Ebenso können amorphe Alkalisilikate, insbesondere feste Natrium- und Kaliumsilikate, die auch wasserfrei sein können, jedoch in Wasser, zumindest bei der gewählten Reaktionstemperatur löslich sind, verwendet werden. Sofern das Molverhältnis ($M_2O$/$SiO_2$ des Ausgangsproduktes zu groß ist (z.B. bei Rückführung stark alkalischer Mutterlaugen), kann man mit einer sauren Verbindung einen Teil des $M_2O$ neutralisieren und das genannte Molverhältnis verringern.

Die zugesetzte saure Verbindung kann ein Säureanhydrid oder ein saures Salz, wie Natriumhydrogensulfat sein. Besonders bevorzugt werden jedoch freie organische oder anorganische Säuren, insbesondere Phosphorsäure oder Schwefelsäure. Als Ausgangsmaterial kann auch amorphe gefällte Kieselsäure zusammen mit Alkalihydroxid im abgegebenen Molverhältnis eingesetzt werden.

Das Verhältnis $M_2O$/$H_2O$ in der Ausgangslösung ist nicht kritisch. Ein hohen $M_2O$/$H_2O$-Verhältnis ist kostengünstiger, kann jedoch die Bildung von Verunreinigungen etwas begünstigen; auch wird die molare Zusammensetzung des kristallinen Produktes durch das $M_2O$/$H_2O$-Verhältnis etwas beeinflußt. Hohe $M_2O$/$H_2O$-Verhältnisse fördern die Bildung silikatreicherer Typen (z.B. $Na_2Si_2O_{45}$).

Das Molverhältnis $M_2O$ (nicht neutralisiert)/$SiO_2$ wird laufend überwacht, z.B. durch Elementaranalyse der abfiltrierten Mutterlauge. Falls M=Na und die saure Verbindung Schwefelsäure ist,

ergibt sich $M_2O$ (nicht neutralisiert) als die Differenz der Konzentration an $Na_2O$ (insgesamt) und der Konzentration an Sulfat. Hinweise liefern auch der pH-Wert und die Dichte der Mutterlauge. Das zu überprüfende Molverhältnis würde ohne Zugabe von Säure in dem Maße ansteigen, in dem silikatreiche Alkalischichtsilikate auskristallisieren. Fast immer weist das gebildete Endprodukt ein geringeres $M_2O/ScO_2$-Verhältnis auf als das Reaktionsgemisch, aus dem es sich bildet. In den Endprodukten liegt das Verhältnis $M_2O/SiO_2$ etwa zwischen 1:8 und 1:22. Auch nach Zugabe der sauren Verbindung liegt der pH-Wert im allgemeinen über 9.

Besonders günstig ist es, wenn man durch Säurezugabe in der Reaktionslösung ein Molverhältnis $M_2O$ (nicht neutralisiert)/$SiO_2$ von 0,1:1 bis 0,5:1 aufrechthält. Dabei soll der pH-Wert nicht unter 9 absinken. Bei geringerem Verhältnis nimmt die Kristallisationsgeschwindigkeit ab. Bei Molverhältnissen über 0,1:1 besteht kaum die Gefahr, daß sich $SiO_2$ (Quarz) als Verunreinigung mit abscheidet. Darüber hinaus erhält man im Molbereich von 0,1:1 bis 0,5:1 die gewünschten kristallinen Alkalisilikate rasch und in guter Ausbeute. Bei stärkerem Abweichen von dem angegebenen Molbereich können auch Cristobalit und Tridymit als unerwünschte Nebenbestandteile auftreten. Die nach dem erfindungsgemäßen Verfahren hergestellten kristallinen Alkalischichtsilikate weisen ein $SiO_2/M_2O$-Verhältnis von über 8:1 auf.

Typische Endprodukte, die sich nach dem erfindungsgemäßen Verfahren erhalten lassen, sind die Schichtsilikate mit den Formeln $Na_2Si_{22}O_{45} \cdot x\,H_2O$, eine Verbindung die dem Kenyait-Typ entspricht und im folgenden als Na-SKS-1 bezeichnet wird, sowie die Verbindung $Na_2Si_{14}O_{29} \cdot x\,H_2O$, eine Verbindung die dem natürlichen Magadiit entspricht und im folgenden als Na-SKS-2 bezeichnet wird. Im folgenden wird in den Formeln ein etwaiger Wassergehalt der Silikate nicht eigens erwähnt. Synthetische Natriumschichtsilikate von Kenyait-Typ sind 1983 von Lagaly (K. Benecke und G. Lagaly, Americ. Mineral, (1983) 68, 818) und solche vom Magadiit-Typ 1952 von McCulloch (L. McCulloch. J. Am. Chem. Soc. 74 (1952) 2453) im Labormaßstab dargestellt worden.

Der Zeitpunkt des Kristallisationsbeginns, der für die erfindungsgemäße Zugabe der sauren Verbindung wichtig ist, wird durch geeignete Vorversuche ermittelt, indem man Proben entrimmt und den vorhandenen Feststoff durch Röntgenanalyse bestimmte. Diese gilt insbesondere bei Einsatz von amorphen, in Wasser aufgeschwemmten Natriumsilikat.

Sobald aus den Reflexen des Röntgenbeugungsdiagrammes auf eine genügende Menge an kristallinem Natriumschichtsilikat geschlossen werden kann, kann auch die Zugabe der sauren Verbindung erfolgen.

Die Zugabe der sauren Verbindung kann auf einmal (bei hohen Molverhältnissen $M_2O$ (nicht neutralisiert)/$SiO_2$), bevorzugt aber kontinuierlich erfolgen. Möglich ist auch die Zugabe der sauren Verbindung in einzelnen Portionen. Es ist vorteilhaft, die Zeitdauer, während der man die saure Verbindung zugibt, so auszudehnen, daß sie bis zum 9-fachen der Zeit zwischen Aufheizen des Reaktionsansatzes und Beginn der Kristallisations beträgt.

Es ist günstig für die Einheitlichkeit des Endprodukts, wenn durch den Säurezusatz von Beginn des Auskristallisierens an bis zur Beendigung der Reaktions stets ein konstantes Molverhältnis $M_2O$ (nicht neutralisiert)/$SiO_2$ eingehalten wird.

Von der sauren Verbindung werden mindestens 5 Milliäquivalent $M^+$/Mol $SiO_2$ des eingesetzten Alkalisilikats zugegeben. Diese Menge wird vorzugsweise möglichst bald nach Beginn des Auskristallisierens des Alkalischichtsilikats zugegeben, wobei das Molverhältnis $M_2O$ (nicht neutralisiert)/$SiO_2$, das vor Beginn des Auskristallisierens gewählt wurde, in diesem Fall gerade durch die Zugabe der sauren Verbindung konstant gehalten wird.

Nach dem erfindungsgemäßen Verfahren lassen sich relativ reine Produkte oder auch Gemische von kristallinen Alkalischichtsilikaten herstellen. Sofern größere Gehalte an Aluminium in den Ausgangsprodukten vorhanden sind, können sich zeolitische Nebenprodukte, meist vom ZSM-5-Typ oder vom Mordenit-Typ bilden. Ein geringer Aluminiumgehalt, wie er beispielsweise in technischem Wasserglas vorhanden ist, stört dagegen nicht. Amorphe Kieselsäure ist nur bei kurzen Reaktionszeiten, Quarz nur bei langen Reaktionszeiten in größeren Anteilen im Reaktionsansatz zu beobachten.

Die nach dem erfindungsgemäßen Verfahren erhältlichen Alkalischichtsilikate tauschen Kationen aus und sind dem Fachmann bekannt.

Neben den Alkalimetallionen (Lithium, Natrium, Kalium) können zusätzlich auch andere Metallionen bei der Synthese anwesend sein, beispielsweise Germanium, Aluminium, Indium, Arsen und Antimon sowie die Nichtmetalle Bor und Phosphor. Sofern die Menge dieser Bestandteile, bezogen auf den Alkaligehalt, kleiner als 10% ist, wird die Synthese nur unwesentlich beeinflußt. Zur Herstellung eines reinen Alkalischichtsilikats ist es vorteilhaft, auf die Zugabe von Fremdmetallen bei der Synthese zu verichten. Das erfindungsgemäße Verfahren kann auch in Gegenwart geringer Mengen an organischen Verbindungen durchgeführt werden; vorzugsweise wird jedoch ohne jegliche organische Verbindung gearbeitet.

Bis zum Beginn des Kristallisierens des Alkalisilikats beträgt die Reaktionstemperatur 70 bis 250°C. Danach kann die Reaktionstemperatur bei 70 bis 300°C, insbesondere 90 bis 270 und vorzugsweise 130 bis 230°C liegen. Besonders bevorzugt sind Temperaturen von 150 bis 210°C, insbesondere 200 bis 210°C.

Die Reaktionsdauer hängt von der Reaktionstemperatur ab. Sie kann weniger als 1 Stunde, aber auch einige Monate betragen. Die optimale Reaktionsdauer kann für die gewählte Reaktionstemperatur ermittelt werden, in dem während der Umsetzung zu verschiedenen Zeitpunkten Proben entnommen werden, die röntgenographisch untersucht werden. Es ist bevorzugt, die Reaktion solange durchzuführen, daß mindestens 70 Molprozent des eingesetzten Alkalisilikats in Alkalischichtsilikat umgewandelt werden.

Kürzere Reaktionszeiten, hohe Reaktionstemperaturen und niedrige Verhältnisse von $M_2O$ (nicht neutralisiert)/$SiO_2$ begünstigen die Bildung alkaliarmer Schichtsilikate (Atomverhältnis M/Si von 1:8 bis 1:12). Kurze Reaktionszeiten, niedrige Reaktionstemperaturen une hohe Alkali/Si-Verhältnisse begünstigen die Bildung alkalireicher Schichtsilikate (Atomverhältnis M/Si etwa 1:4 bis 1:7).

Für die Synthese von Na-SKS-1 werden Temperaturen von 195 bis 210°C und Reaktionszeiten von maximal 6 Stunden bevorzugt. Für die Synthese von Na-SKS-2 werden Reaktionstemperaturen von 160 bis 190°C und Reaktionszeiten von maximal 15 Stunden bevorzugt. Die Zugabe von Impfkristallen ist von wesentlichem Einfluß auf die Art des Auskristallisierenden Schichtsilikats. Auch hier sind für die Bildung der Verbindung Na-SKS-2 ($Na_2Si_{14}O_{29}$) Reaktionszeiten von weniger als 15 Stunden vorteilhaft und für die Bildung der Verbindung Na-SKS-1 ($Na_2Si_{22}O_{45}$) Reaktionszeiten von weniger als 6 Stunden vorteilhaft. Zur Herstellung der Verbindung $Na_2Si_{22}O_{45}$ ist es vorteilhaft, nach Beginn der Kristallisations anfangs Molverhältnisse $M_2O$ (nicht neutralisiert)/$SiO_2$ von 0,09:1 bis 0,17:1 einzuhalten.

Die Umsetzung wird vorzugweise in einem Druckgefäß unter gutem Rühren durchgeführt. Die Zugabe von Impfkristallen ist vorteilhaft, da durch sie die Reinheit des Produkts verbessert und die Reaktionszeit verkürzt wird. Jedoch kann auch ohne Impfkristalle gearbeitet werden.

Die Mende an Impfkristallen kann bei diskontinuierlicher Reaktionsführung bis zu 30 Gew.-%, bezogen auf den $SiO_2$-Anteil des zugesetzten, in Wasser gelösten oder aufgeschlämmten amorphen Alkalisilikats betragen. Impfkristallzusätze unter 0,01 Gew.-% haben keinen erkennbaren Effekt mehr. Es ist dahen sinnvoll, sofern man das Auskristallisieren beschleunigen will und reine Produkte erhalten will, mindestens 0,5 Gew.-% Impfkristalle (bezogen auf den $SiO_2$-Anteil des zugesetzten Alkalisilikats) dem Reaktionsansatz beim Start, gegebenenfalls auch danach einzuverleiben. Anstatt Impfkristalle zuzusetzen, kann es auch ausreichend sein, wenn geringe Reste von einem früheren Ansatz im Reaktionsgefäß verbleiben. Bei kontinuierlicher Reaktionsführung haben sich auch wesentlich höhere Konzentrationen an Kristallkeimen (im stätionären Gleichgewicht) als vorteilhaft erwiesen. Solche Konzentrationen lassen sich in diesem Fall durch eine Rückführung eines Teils des Reaktionsproduktes leicht erreichen.

Als Impfkristalle werden ebenfalls Natriumschichtsilikate eingesetzt, insbesondere die Verbindungen Na-SKS-1 (Kenyait-Typ) und Na-SKS-2 (Magadiit-Typ). Die Impfkristalle haben in Abhängigkeit vom Kristalltyp (bis auf Verunreinigungen) eine typische Zusammensetzung. Die Zusammensetzung des auskristallisierenden natriumschichtsilikats entspricht weitgehend der Zusammensetzung des zugegebenen Impfkristalls.

Das erfindungsgemäße Verfahren kann diskontinuierlich, halbkontinuierlich und kontinuierlich in Apparaten mit Strömungsrohr-, Rührkessel- oder Kaskadenscharakteristik durchgeführt werden.

Im folgenden soll die halbkontinuierliche Herstellung eines kristallinen Alkalischichtsilikats in einem Rührkessel näher erläutert werden. Da die Reaktionstemperatur meist oberhalb 100°C liegt, wird ein Arbeiten im Autoklaven erforderlich. Eine zusätzliche Erhöhung des Druckes durch Zugabe eines Inertgases bringt keine Vorteile. Auch während der Zugabe der Reaktionskomponenten soll die Temperatur der Reaktionsmischung im Bereich von 70 bis 250°C, insbesondere 130 bis 210°C liegen. Dies ist besonders leicht möglich, wenn die zuzugebenden Substanzen bereits aufgeheizt sind. Der Druck im Reaktionsgefäß soll unter 100 bar liegen, im allgemeinen im Bereich von 1 bis 30 bar. Sofern der Druck im Rührkessel oberhalb von 1 bar liegt, werden für das Eindosieren der Reaktionskomponenten Pumpen erforderlich. Vorzugsweise werden die sauren Verbindungen und die basischen Reaktionskomponenten (Alkalisilikate, Natriumhydroxid) getrennt zudosiert.

Die Ausgangsprodukte können nacheinander zugegeben werden; bevorzugt wird jedoch eine gleichzeitige Zugabe. Falls mehrere hintereinander geschaltete Reaktionskessel eingesetzt werden, so ist es vorteilhaft, wenn die Zugabedauer für jede Komponente entsprechend angepaßt wird, und insbesondere die Zugabedauer für jede Komponente 10 bis 100%, insbesondere 20 bis 80% der Verweilzeit im ersten Rührkessel beträgt.

Wann Während der Zugabe nicht gleichzeitig Produkt abgeführt wird, steigt der Inhalt im Rührgefäß an. Die Zugabe muß dann spätestens beendet werden, wenn der maximale füllstand erreicht ist. Die Reaktion nach Beginn des Auskistallisierens des Schichtsilikats, die sogenannten "Nachkristallisation", kann gegebenenfalls in einem zweiten Gefät stattfinden. Die Nachkristallisation soll unter Rühren erfolgen. Die Dauer der Nachkristallisation (unter Zugabe einer sauren Verbindung zur Einhaltung des Gewünschten Molverältnisses) soll maximal der 100-fachen, vorzugsweise maximal der 10-fachen mittleren Verweilzeit im ersten Rührkessel entsprechen. Durch Verwendung von mehreren Kesseln ist es möglich, die Nachkristallisation bei tieferen Temperaturen als im ersten Rührkessel durchzuführen. Die saure Verbindung wird, in Abhängigkeit von der Verweilzeit und der Temperatur entweder in den ersten oder in den nachfolgenden Reaktionskessel zugegeben.

Es ist für eine halbkontinuierliche oder diskontinuierliche Reaktionsführung vorteilhaft, den oder die Autoklaven nicht vollständig zu entleeren,

sondern stets mit geringen Anteilen einer alten Produktmischung zu arbeiten. Auf diese Weise läßt sich ständig ein annähernd gleichbleibender Gehalt an Impfkristallen erreichen.

Soll das Produkt aus dem noch unter Druck befindlichen Autoklaven entleert werden, so kann das mit einem entsprechenden Bodenablaßventil erreicht werden. Wenn keine vollständige Entleerung gewünscht wird, so wird das Produkt vorteilhafterweise über ein Steigrohr entleert, das in die Reaktionsmischung eintaucht und mit einem Ventil verschlossen wird. Durch die Länge des Steigrohres wird festgelegt, wieviel Produkt maximal entfernt werden kann und wieviel Impfkristalle zurückbleiben.

Vorteilhafterweise wird das erfindungsgemäße Verfahren kontinuierlich betrieben. Neben der kontinuierlichen Zuführung der Ausgangskomponenten (z.B. Alkalisilikat, saure Verbindungen) ist hierfür ein kontinuierlicher Austrag der Reaktionsprodukte erforderlich. Auch dies kann beispielsweise mit einem Steigrohr geschehen. Zur Überwachung des Reaktionsgefäßes ist es zweckmäßig, den Füllstand durch eine Füllstandsanzeige oder durch eine Gesamtgewichtsmessung des Apparates zu kontrollieren.

Die Reaktionszeit wird sowohl im Chargenbetrieb wie bei kontinuierlicher Führung im allgemeinen aus wirtschaftlichen Gründen so bemessen, daß mindestens 10%, vorteilhafterweise jedoch mehr als 70% des zugegebenen Alkalisilikats in Alkalischichtsilikat umgewandelt werden. Bei höheren Reaktionstemperaturen sind geringere Reaktionszeiten erforderlich. Bei Temperaturen oberhalb von 200°C reichen zum Beispiel für die Herstellung von Na-SKS-1 schon Zeiten von weniger als 1 Stunde aus. Da mit zunehmender Reaktionszeit die Ausbeuten immer langsamer steigen, können wirtschaftliche Gründe dafür sprechen, die maximalen Ausbeuten nicht abzuwarten, sondern sich mit kürzeren Verweilzeiten und geringeren Ausbeuten zufriedenzugeben.

Für die Isolierung des Schichtsilikats wird die Reaktionsmischung nach der Umsetzung filtriert. Das Filtrat kann beim nächsten Ansatz anstelle von Wasser eingesetzt werden. Speziell bei dieser Variante kann dan Moleverhältnis $Na_2O:SiO_2$ zwischen 0,239:1 und 0.8:1 liegen.

Soll die gesamte Mutterlauge wieder verwendet werden, wird aus dieser ein Teil des Wassers abgedampft (z.B. im Entspannungsgefäß), damit die Wassermenge im Krestlauf konstant bleibt. Der Salzgehalt wird nach mehreren Umsetzungen so hoch, daß eine Teil des Salzes während der Umsetzung oder beim Abdampfen von Wasser auskristallisiert. Das Verfahren der Kreislaufführung von Mutterlauge ist von besonderem Vorteil, wenn das erzeugte Schichtsilikat in Waschmitteln eingesetzt werden soll. Man verwendet dann Schwefelsäure als sauren Reaktanden und kann das entstehende Natriumsulfat im Waschmittel mitverwenden. Auch kann in diesem Falle auf das Waschen und Trocknen des Filterkuchens verzichtet werden. Benötigt man dagegen ein von Begleitsalzen freies Produkt, wird der Filterkuchen mit Wasser oder verdünnter Alkalilauge (entsprechend dem hergestellten Alkalisilikat) gewaschen und gegebenenfalls getrocknet. Es kann aber auch für manche weitere Verarbeitung vorteilhaft sein, das filterfeuchte Produkt direkt weiterzuverarbeiten. So kann man durch Behandeln mit Salzsäure die Alkaliionen durch H-Ionen ersetzen (unter Bildung von Schichtkieselsäuren) oder durch Behandeln mit Alkalisalzlösungen andere Kationen einführen. Diese Kationen können z.B. einwertige oder zweiwertige Metalionen, aber auch Alkylammoniumionen mit 1—4 Alkylresten sein. Die nach dem erfindungsgemäßen Verfahren hergestellten Alkalisilikate können als Adsorptionsmittel analog den Silikaten der DE—PS 2 742 912 verwendet werden.

Ein weiteres sehr interessantes Einsatzgebiet für Alkalischichtsilikate findet sich im Bereich der Waschmittel. Hier dienen sie direkt oder nach Belegung mit organischen Aminen zum Weichspülen von Textilien (Deutsche Offenlegungsschrift 3 416 669 bzw. Deutsche Offenlegungsschrift 3 416 472). Organisch modifizierte Schichtsilikate sind in der Hage, beachtliche Mengen an organischen Verbindungen, wie z.B. Fette oder Weichmacher, zu binden.

Sie sind daher als waschverstärkende Additive in waschmitteln oder als Depot für organische Verbindungen hervorragend geeignet (Deutsche Offenlegungsschrift 3 434 709).

Weiterhin können die Alkalischichtsilikate oder Schichtkieselsäuren (SKS) zu Formkörpern verarbeitet werden, die teilweise auch katalytisch aktiv sind. (Deutsche Offenlegungsschrift 3 426 389). Nach Kalzinierung erhält man Formkörper mit Cristobalit- bzw. Tridymit-Struktur (Deutsche Patentanmeldung P 34 40 252.7).

Die Erfindung wird durch die Beispiele näher erläutert.

Beispiel 1
A) Versuchsapparatur

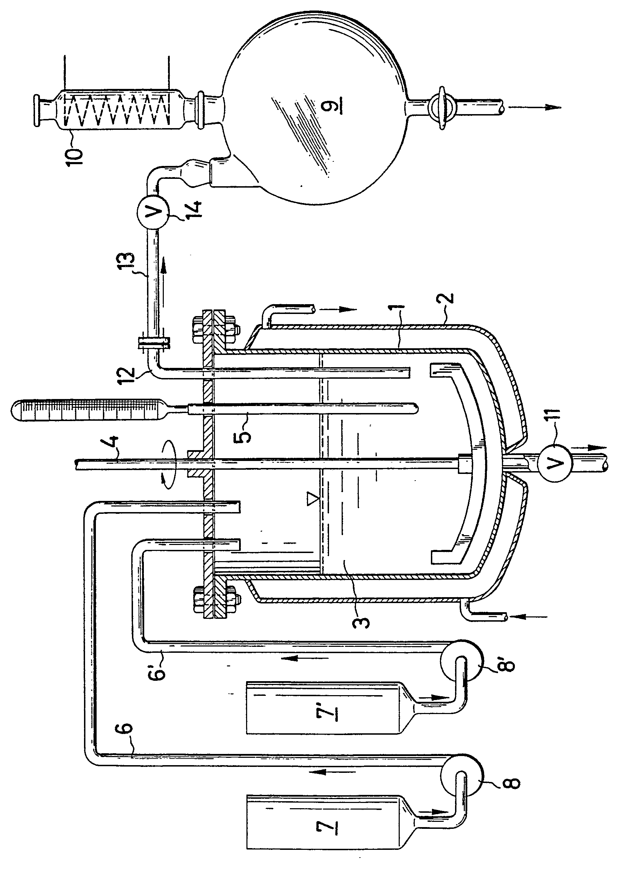

Die verwendete Apparatur ist in der Figur dargestellt. Es handelt sich im wesentlichen um einen Rührautoklav (1) aus Edelstahl für den Laborbetrieb. Dieser hat ein Nettovolumen von etwa 2 l bei einem Innendurchmesser von etwa 14 cm und ein maximale Innenhöhe von 17,5 cm. Beheizbar ist dieses Gefäß durch den Heizmantel (2), der normalerweise mit Öl gefüllt ist. Die in dem Rührautoklaven hergestellte Reaktionsmischung (3) wird durch den Rührer (4) gemischt, wobei verschiedene Rührgeschwindigkeiten eingestellt werden können. Die Innentemperatur wird mit einem Thermometer in der Thermometerhülse (5) kontrolliert. Die Temperaturmessung wird zur Regelung der Öltemperatur verwendet, um eine Temperaturkonstanz in dem Rührautoklaven zu gewährleisten. Die Ausgangsprodukte werden in den Vorratsgefäßen (7) und (7') vorgelegt, Mit Hilfe von Pumpen (8) und (8') werden diese Ausgangsprodukte über die Leitungen (6) und (6') dem Rührautoklaven zugeführt. Gefäß (7) enthält technisches Wasserglas (mit Wasser verdünnt) und das andere Gefäß (7') die saure Verbindung (konz. Phosphorsäure).

Durch Einstellung von Hubhöhe und Frequenz der Pumpen kann die Zugabemenge und damit die Zugabedauer gesteuert werden. Die Zuleitungen sind durch Ventile verschlossen. Der Rührautoklav ist weiterhin aus Sicherheitsgründen mit einem Manometer und auch mit einem Sicherheitsventil ausgestattet. (Manometer, Sicherheitsventil und die einzelnen Ventile sind nicht gezeichnet).

Nach Beendigung jedes Versuches wird über das Bodenauslaßventil (11) die Reaktionsmischung ausgetragen. Das Produkt wird abfiltriert, und in üblicher Weise mit Wasser gewaschen und an der Luft getrocknet.

Für eine nur teilweise Entleerung des Autoklaven, insbesondere bei kontinuierlichem Betrieb, wird das Produkt über das Steigrohr (12) und die Leitung (13) ausgetragen. Diese Leitung (13) ist mit einem Ventil (14) versehen. Durch eine entsprechende Regelung dieses Ventils (14) kann man das Produkt portionsweise oder kontinuierlich austragen. Es wird in das Druckausgleichsgefäß (9) gedrückt, das mit einem Rückflußkühler (10) zur Kondensation des Wasserdampfes versehen ist. Der Kolben (9) wird portionsweise oder kontinuierlich entleert.

B) Versuchsdurchführung

Es wird eine Reaktionsmischung mit folgendem Molverhältnis hergestellt: 0,303 Na$_2$O:1 SO$_2$: 30 H$_2$O. Sie enthält als Verunreinigung weiterhin 0,0052 mol Al$_2$O$_3$ bezogen auf 1 mol SiO$_2$.

Diese Reaktionsmischung wird dadurch hergestellt, daß man 1015 g Natronwasserglas der Zusammensetzung 27% SiO$_2$, 8,43% Na$_2$O, (0,1% Al$_2$O$_3$ als Verunreinigung, Molverhältnis Na$_2$O:SO$_2$ 0.303:1) mit 960 g Wasser mischt und 10 g eines kristallinen Natriumschichtsilikates (Na-SKS-1) aus einem früheren Versuch als Impfkristalle hinzugibt. Man setzt dann dieser Mischung chargenweise konzentrierte Phosphorsäure zu und zwar insgesamt 0,753 mol. Davon wird ca. ein Drittel, das sind 0,251 mol, relativ frühzeitig bei Reaktionsbeginn zugegeben. Das Molverhältnis Na$_2$O (nicht neutralisiert): SiO$_2$ beträgt jetzt 0,26:1. Die restlichen 0,502 mol werden erste nach Beginn der Kristallisation hinzugegeben. Die Reaktionsmischung wird im geschilderten Autoklaven innerhalb von 1—1 1/2 Stunden auf die gewünschte Temperatur von ca. 205°C gebracht. Jetzt werden kleine Proben über das Ablaßventil (11) entnommen und röntgenographisch untersucht. Bei kontinuierlicher Routineproduktion kann man unter Umständen auf diese aufwendige Prüfung verzichten. Die Kristallisation beginnt, wenn die Intensität der für die gewünschten Schichtsilikate spezifischen Röntgenbeugungslinien in der Probe zunimmt, da sich weitere Mengen dieses Schichtsilikats bilden. Nach Beginn der Kristallisation werden in zwei weiteren Portionen die restlichen Säuremengen, nämlich je 0,251 mol im Abstand von etwa 1 Stunde hinzugegeben, wobei nach der ersten Zugabe das Molverhältnis Na$_2$O (nicht neutralisiert): SiO$_2$=0,22 vorliegt. Durch die beginnende Auskristallisation des Endproduktes steigt das Verhältnis von Na$_2$O (nicht neutralisiert) zu SiO$_2$ in der (filtrierten) Lösung an und beträgt nach Zugabe der letzten Säureportion (0,34:1. Die Umsetzung zum Endprodukt hat zu diesem Zeitpunkt 55% d · Th. (bezogen auf eingesetztes SiO) erreicht. Die Zugabe der restlichen Säuremengen kann ebensogut auch kontinuierlich erfolgen. Nach insgesamt 3 Stunden wird das gesamte Produkt über (11) abgelassen und wie beschrieben aufgearbeitet. Bei dem Ablassen und bei der ersten Probenahme wird jeweils der pH diese Gemisches überprüft. Er liegt etwa im Bereich von 11,5 bis 11,7. Nach dem üblichen Aufarbeiten erhält man bei diesen Versuch eine Ausbeute von etwa 82% des gewünschten Schichtsilikats (bezogen auf eingesetztes SiO$_2$).

Man erhält ein Produkt, das dem Kenyait entspricht. Das SiO$_2$/Na$_2$O-Verhältnis des Produktes liegt bei 22 und das H$_2$O/Na$_2$O-Verhältnis liegt im Bereich von 4. Die Formel Na$_2$Si$_{22}$O$_{45}$ · 4 H$_2$O ist damit etwa zutreffend.

Das entsprechende freie Schichtsilikat in der H-Form läßt sich daraus durch Ionenaustausch mit starken Mineralsäuren erhalten.

Unter ähnlichen Bedingungen aber mit Impfkristallen des Magadiit-Tyups (Na-SKS-2) kann man auch ein Produkt erhalten, das ein SiO$_2$:Na$_2$O-Verhältnis von etwa 14,0:1 aufweist. Dies stimmt mit der elementaranalytischen Zusammensetzung von Magadiit etwa überein. Von Lagaly et al. (American Mineral. *60*, 642—649 (1975)) wird für dieses synthetische wie auch für das in der nature gefundene Schichtsilikat eine elementare Zusammensetzung SiO$_2$:Na$_2$O von etwa 13,4 bis 14,4:1 angegeben (Na-SKS-2). Die Röntgenbeugungsdiagramme der reinen Schichtsilikate (Na-SKS-1 und Na-SKS-2) finden sich in der Tabelle.

TABELLE

Röntgenbeugungsdiagramme:

| Na-SKS-1 | | Na-SKS-2 | |
|---|---|---|---|
| d (10$^{-8}$cm) | I/Io | d (10$^{-8}$cm) | I/Io |
| 20,5 | 56 | 15,5 | 100 |
| 10,0 | 11 | 7,76 | 13 |
| 7,31 | 4 | 5,15 | 20 |
| 4,99 | 13 | 4,69 | 8 |
| 3,64 | 22 | 4,44 | 10 |
| 3,52 | 31 | 4,23 | 7 |
| 3,44 | 100 | 3,63 | 18 |
| 3,34 | 46 | 3,54 | 24 |
| 3,21 | 53 | 3,44 | 79 |
| 2,94 | 16 | 3,30 | 40 |
| 2,94 | 16 | 3,14 | 65 |
| | | 2,81 | 11 |
| | | 2,48 | 8 |
| | | 2,34 | 6 |

Beispiel 2

A) Versuchsapparatur

Verwendet wird eine Technikumsapparatur, die im Aufbau der im Beispiel 1 verwendeten Laborapparatus entspricht. Ein Rührautoklav mit einer maximalen Füllmenge von 250 l ist von einem Heizmantel umgeben, der mit Hochdruckdampf beheizt wird. Kontrolliert wird die Temperatur im Kessel sowie der Druck im Kessel und im Heizmantel. Die gewünschte Temperatur im Rührgefäß kann durch Regelung des Dampfdruckes im Heizmantel eingestellt werden. Die Entleerung ist sowohl drucklos über das Bodenablaßventil als auch unter Druck über ein Steigrohr und ein nachgeschaltetes Druckausgleichsgefäß möglich. Zur Filtration des Reaktionsproduktes werden Vakuumsaugfilter eingesetzt.

B) Versuchsdurchführung

In dem Reaktionskessel werden 125,3 kg Natronwasserglas mit 8,3% $Na_2O$ und 27,8 g $SiO_2$ eingefüllt. Dies entspricht 167,65 mol $Na_2O$ und 580,51 mos $SiO_2$, d.h. einem Molverhältnis von 0,289:1. Das Wasserglas wird mit 120 kg Wasser verdünnt. Dann wird 1 kg synthetischer Kenyait (aus einem früheren Versuch) zugesetzt. Unter krätigem Rühren erfolgt der Zusatz von 7,4 kg einer 96%igen Schwefelsäure (=72,49 mol). Das Reaktionsgemisch wird unter weiterem kräftigen Rühren in ca. 1 Std. auf 205°C erhitzt. Das Moverhältnis (nicht neutralisiert) $Na_2O$ zu $SiO_2$ beträgt nach dieser ersten Säurezugabe 0,164:1. Nach ca. einer halben Stunde hat die Kristallisation begonnen. Nun werden weitere 2,59 kg der 96%igen Schwefelsäure (=25,37 mol) zugepumpt. Das Molverhältnis von $Na_2O$ (nicht neutralisiert) zu $SiO_2$ beträgt nun 0,12. Durch die jetzt rasch erfolgenden Auskristallisation des Endproduktes sinkt der Gehalt an $SiO_2$ in der Muttelauge und damit steigt das Verhältnis $Na_2O$ (nicht neutralisiert) zu $SiO_2$ stark an. Nachdem die Reaktion noch eine Stunde bei 205°C gelaufen ist, wurde der Versuch abgebrochen und das Produkt in das Druckausgleichsgefäß übergedrückt. Zu diesem Zeitpunkt beträgt das Verhältnis $Na_2O$ (nicht neutralisiert zu $SiO_2$ in der Mutterlauge 0,565. Das filtrierte, gewaschene und bei 120°C gertocknete Produkt entspricht der Formel $Na_2Si_{22}O_{45} \cdot 4 H_2O$. Die Ausbeute (bezogen auf eingesetztes ($SiO_2$) beträgt 85,6%.

Beispiel 3
A) Versuchsapparatur
Die Versuchsapparatur ist die gleiche wie bei Beispiel 2.

B) Versuchsdurchführung

In dem Rührkessel werden 83.5 kg des gleichen Natronwasserglases wie in Beispiel 2 mit 150 l Wasser vermischt. Es erfolgt die Zugabe von 4,93 kg einer 96%igen Schwefelsäure (=48,3 mol). Das Verhältnis $Na_2O$ (nicht neutralisiert) zu $SiO_2$ beträgt nun 0,164:1. Jetzt werden 0,6 kg synthetischer Magadiit (aus einem früheren Ansatz) eingerührt. Nach Erhitzen auf 165°C werden Proben zur Verfolgung des Kristallisationsablaufes entnommen. Die Kristallisation beginnt nach ca. 2 Stunden. Nun werden weitere 4,83 mol $H_2SO_4$ zugesetzt. Das Verhältnis $Na_2O$ (nicht neutralisiert) zu $SiO_2$ beträgt nun 0,155:1. Die Reaktion wird bei 165°C insgesamt 17 Stunden durchgeführt. Am Ende beträgt das Verhältnis $Na_2O$ (nicht neutralisiert) zu $SiO_2$ in der Mutterlauge 0,45. Der Rührkessel wird wie im Beispiel 2 entleert und das Reaktionsprodukt wie dort beschrieben aufgearbeitet. Das erhaltene Produkt hat Magadiit-Struktur. Die Ausbeute beträgt 79,1% (bezogen auf eingesetztes $SiO_2$).

Patentansprüche

1. Verfahren zur Herstellung eines kristallinen Alkalischichtsilikates bei dem man ein wäßrige Lösung von Alkalisilikat oder eine Aufschlämmung von amorphem Alkalisilikat mit einem Molverhältnis $M_2O$ (nicht neutralisiert)/$SiO_2$, wobei M für ein Alkalimetall steht, von 0,05:1 bis 0,8:1, bei Temperaturen von 70 bis 250° hält und diese Reaktionsmischung solange reagieren läßt bis das Alkalischichtsilikat auskristallisiert, dadurch gekennzeichnet, daß man nach dem Beginn der Kristallisation eine saure Verbindung in einer solchen Menge zusetzt, daß ständig in der Mutterlauge einer abfiltrierten Probe ein Verhältnis $M_2O$ (nicht neutralisiert)/$SiO_2$ von 0,05:1 bis 0,8:1 eingehalten wird, mindestens jedoch in einer Menge von 5 Milliäquivalenten $H^+$/Mol $SiO_2$ des eingesetzten Alkalisilikats.

2. Verfahren nach Anspruch 1, dadurch gekennzeichnet, daß die Reaktion solange durchgeführt wird, daß mindestens 70 Molprozent des eingesetzten Alkalisilikats in Alkalischichtsilikat umgewandelt werden.

3. Verfahren nach Anspruch 1, dadurch gekennzeichnet, daß man nach Beginn der Kristallisations Impfkristalle des gewünschten Alkalischichtsilikats zur Reaktionsmischung gibt.

4. Verfahren nach Anspruch 3, dadurvch gekennzeichnet, daß man Impfkristalle der Formel $Na_2Si_{14}O_{29}$ zugibt.

5. Verfahren nach Anspruch 4, zur Herstellung eines Schichtsilikats der ungefähren Formel $Na_2Si_{14}O_{29}$, dadurch gekennzeichnet, daß die gesamte Reaktionszeit (zwischen Aufheizen und Abfiltrieren der entstandenen Schichtsilikate) weniger als 18 Stunden beträgt und man im Temperaturbereich von 160 bis 190°C arbeitet.

6. Verfahren nach Anspruch 3, dadurch gekennzeichnet, daß man Impfkristalle der Formel $Na_2Si_{22}O_{45}$ zugibt.

7. Verfahren gemäß Anspruch 6 zur Herstellung des Alkalischichtsilikats der ungefähren Formel $Na_2Si_{22}O_{45}$, dadurch gekennzeichnet, daß die gesamte Reaktionszeit weniger als 6 Stunden beträgt und man im Temperaturbereich von 195 bis 210°C arbeitet.

8. Verfahren nach Anspruch 1, dadurch gekennzeichnet, daß man nach Beeindigung der Reaktion das entstandene Schichtsilikat von der Mutterlauge abtrennt und diese als Verdünnungs- und/oder Lösemittel für einen weiteren Reaktionsansatz verwendet.

9. Verfahren nach Anspruch 8, dadurch gekennzeichnet, daß man die Muttelauge vor der weiteren Verwendung teilweise eindampft.

## Revendications

1. Procédé de fabrication d'un phyllosilicate de métal alcalin cristallisé dans lequel on maintient à des températures de 70 à 250°C une solution aqueuse d'un silicate alcalin ou une suspension dans de l'eau d'un silicate alcalin amorphe de rapport molaire $M_2O$(non-neutralisé)/$SiO_2$, M désignant un métal alcalin, de 0,05:1 à 0,8:1, et on laisse réagir ce mélange de réaction jusqu'à ce que le phyllosilicate alcalin cristallise, procédé caractérisé en ce que l'on ajoute après le début de la cristallisation un composé acide dans une proportion qui maintient constamment, dans la liqueur-mère d'un échantillon qui a été séparé par filtration, un rapport $M_2O$(non-neutralisé)/$SiO_2$ de 0,05:1 à 0,8:1, mais dans une proportion d'au moins 5 milliéquivalents d'ions $H^-$ par mol de $SiO_2$ du silicate alcalin employé.

2. Procédé selon la revendication 1, caractérisé en ce que l'on poursuite la réaction jusqu'à ce qu'au moins 70 mol % du silicate alcalin employé aient été transformés en phyllosilicate alcalin.

3. Procédé selon la revendication 1, caractérisé en ce que, après le début de la cristallisation, on ajoute comme germes au mélange de réaction des cristaux du phyllosilicate alcalin que l'one veut obtenir.

4. Procédé selon la revendication 3, caractérisé en ce que les cristaux servant de germes sont des cristaux de formule $Na_2Si_{14}O_{29}$.

5. Procédé selon la revendication 4 pour la fabrication d'un phyllosilicate de formule voisine de $Na_2Si_{14}O_{29}$, procédé caractérisé en ce que le temps de réaction total, c'est-à-dire entre le chauffage et la filtration du phyllosilicate formé, est inférieur à 18 heures, et en ce que l'on opère dans un intervalle de températures de 160 à 190°C.

6. Procédé selon la revendication 3, caractérisé en ce que l'on ajoute comme germes des cristaux de formule $Na_2Si_{22}O_{45}$.

7. Procédé selon la revendication 6 pour la fabrication du phyllosilicate alcalin de formule voisine de $Na_2Si_{22}O_{45}$, procédé caractérisé en ce que le temps de réaction total est inférieur à 6 heures et on opère dans un intervalle de températures de 195 à 210°C.

8. Procédé selon la revendication 1, caractérisé en ce que, après la fin de la réaction, on sépare le phyllosilicate formé de sa liqueur-mère et on réutilise celle-ci comme diluant et/ou solvant pour une autre opération de réaction.

9. Procédé selon la revendication 8, caractérisé en ce que l'on évapore partiellement la liqueur-mère avant de la réutiliser.

## Claims

1. Process for the preparation of a crystalline sheet-type alkali metal silicate, in which an aqueous solution of an alkali metal silicate or a suspension of an amorphous alkali metal silicate having a molar ratio $M_2O$ (unneutralized)/$SiO_2$, where M represents an alkali metal, of 0.05:1 to 0.8:1 is kept at temperatures of 70 to 250°C, and this reaction mixture is allowed to react until the sheet-type alkali metal silicate crystallizes out, wherein, after the beginning of crystallization an acidic compound is added in an amount such that an $M_2O$ (unneutralized)/$SiO_2$ ratio of 0.05:1 to 0.8:1 is constantly maintained in the mother liquor of a filtered sample, but at least in an amount corresponding to 5 milliequivalents of $H^+$ per mole of $SiO_2$ in the alkali metal silicate employed.

2. The process as claimed in claim 1, wherein the reaction is carried out until at least 70 mol percent of the alkali metal silicate used have been converted to sheet-type alkali metal silicate.

3. The process as claimed in claim 1, wherein seed crystals of the desired sheet-type alkali metal silicate are added to the reaction mixture after crystallization has begun.

4. The process as claimed in claim 3, wherein seed crystals of the formula $Na_2Si_{14}O_{29}$ are added.

5. The process as claimed in claim 4 for the preparation of a sheet silicate of the approximate formula $Na_2Si_{14}O_{29}$, wherein the total reaction time (between heating up and filtering off the sheet silicates formed) is less than 18 hours, and the procedure is carried out in the temperature range from 160 to 190°C.

6. The process as claimed in claim 3, wherein seed crystals of the formula $Na_2Si_{22}O_{45}$ are added.

7. The process as claimed in claim 6 for the preparation of the sheet-type alkali metal silicate of the approximate formula $Na_2Si_{22}O_{45}$ wherein the total reaction time is less than 6 hours, and the procedure is carried out in the temperature range from 195 to 210°C.

8. The process as claimed in claim 1, wherein, when the reaction is complete, the sheet silicate formed is separated off from the mother liquor, and the latter is used as a diluent and/or solvent for a further reaction batch.

9. The process as claimed in claim 8, wherein the mother liquor is partially evaporated down before being used further.